# EUROPEAN PATENT APPLICATION

(11) **EP 4 564 171 A1**
(43) Date of publication of application: **04.06.2025**
(21) Application number: 22953190.0
(22) Date of filing: 29.07.2022
(51) Int. Cl.: G06F 9/54

(54) **COMPUTER SYSTEM, TASK SCHEDULER DEVICE, PENDING PROCESS AWAKENING METHOD, AND PROGRAM**

(71) Applicant: NIPPON TELEGRAPH AND TELEPHONE CORPORATION, Chiyoda-ku, Tokyo 100-8116 (JP)
(72) Inventor: OTANI, Ikuo, Musashino-shi, Tokyo 180-8585 (JP); FUJIMOTO, Kei, Musashino-shi, Tokyo 180-8585 (JP)
(74) Representative: Dehns
(86) International application number: PCT/JP2022/029347
(87) International publication number: WO 2024/024102

(57) **Abstract**

A computing system (1000) which includes a processor composed of a plurality of cores and in which a process that executes a predetermined command using a time on the processor operates, wherein the process includes: a waiting process (101) that transitions into and remains in a wait state until notified and wakes up to resume an operation when notified; and a notification process (90) that transmits a notification to wake up the waiting process when an event occurs, and wherein the waiting process (101) has a pseudo idle task (103) that, when being in a waiting state, continues to occupy the processor.

## Description

### Technical Field

The present invention relates to a computing system, a task scheduler device, a waiting process wake-up method, and a program.

### Background Art

In a computing system, a general-purpose processor (CPU) is equipped on a computer (hereinafter, a server), and in a case where it is not necessary to always cause a process operating on the CPU to operate, the process is put into a stop state, and a notification is sent from another process at a necessary timing to restore the process to an operating state.

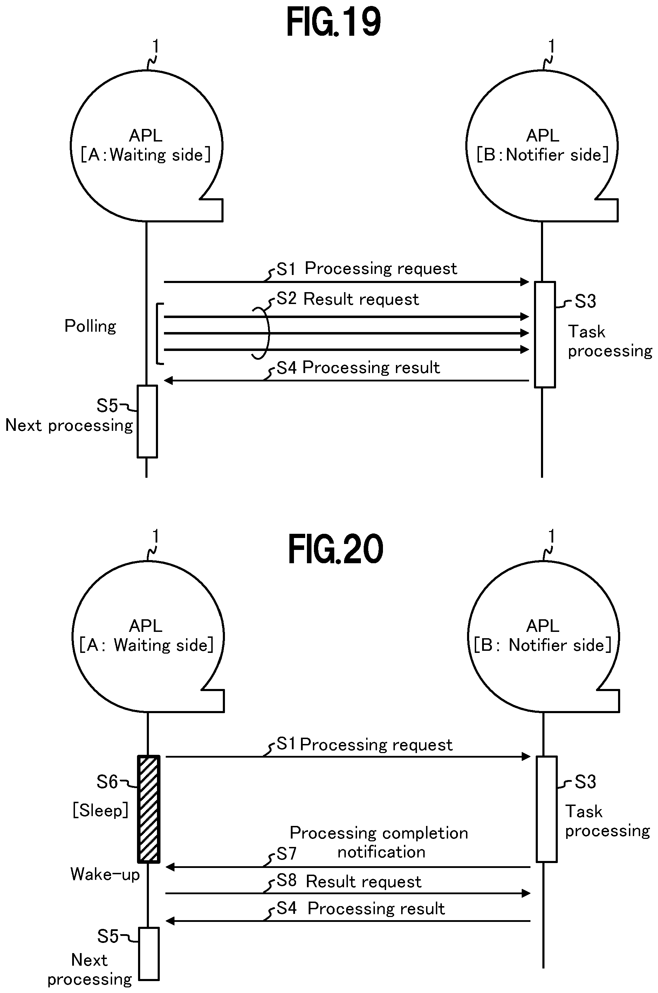

FIG. 19 is a diagram illustrating inter-process communication in a server by a polling scheme.

As illustrated in FIG. 19, an application (hereinafter, referred to as "APL" as appropriate) [A: Waiting side] 1 requests (S1) APL [B: Notifier side] 1 to perform processing of a task. Thereafter, APL [A: Waiting side] 1 requests (S2) the processing result by polling. APL [B: Notifier side] 1 executes (S3) the task processing requested from APL [A: Waiting side] 1.

When the requested task processing is completed, APL [B: Notifier side] 1 transmits (S4) the processing result to APL [A: Waiting side] 1 in response to a polling request. APL [A: Waiting side] 1 executes (S5) the next processing.

FIG. 20 is a diagram illustrating inter-process communication in a server according to a notification scheme. The same processing steps as those in FIG. 19 are denoted by the same step numbers.

As illustrated in FIG. 20, processing of a task is requested (S1) from APL [A: Waiting side] 1 to APL [B: Notifier side] 1. APL [A: Waiting side] 1 performs sleep control to enter (S6) a sleep state.

APL [B: Notifier side] 1 executes (S3) the task processing requested from APL [A: Waiting side] 1.

When the requested task processing is completed, APL [B: Notifier side] 1 notifies (S7) APL [A: Waiting side] 1 of processing completion.

APL [A: Waiting side] 1, upon reception (S7) of the processing completion notification from APL [B: Notifier side] 1, wakes up from the sleep state and requests (S8) the processing result from APL [B: Notifier side] 1.

APL [B: Notifier side] 1, upon reception of the result request from APL [A: Waiting side] 1, sends (S4) the processing result to APL [A: Waiting side] 1. APL [A: Waiting side] 1 executes (S5) the next processing.

In the polling scheme in FIG. 19, for example, a certain Process A requests another Process B to perform processing of a task and, until the task processing by Process B is completed, polls whether the task processing has been completed. Process A is in an operating state, and thus the power consumption increases.

The notification scheme of FIG. 20 employs the sleep control in which Process A enters a sleep state after having requested Process B to process the task. As Process A enters a sleep state, the power consumption can be reduced. As Process A enters a sleep state, Process B notifies Process A of completion of the processing, and Process A having received the notification wakes up from sleep and requests the processing-completed task from Process B. However, as Process A wakes up from sleep, a latency time for restoration occurs.

In order to perform such notification at high speed between processes in the same server, it is common to perform notification through a resource such as a file descriptor shared by the parties. However, as the process is managed by a scheduler or a governor of the OS until the process is restored from a stop state, a latency time that is not expected by the user may occur.

As an existing technique, there is a notification mechanism using functions "eventfd + epoll_wait" in Linux OS (registered trademark).

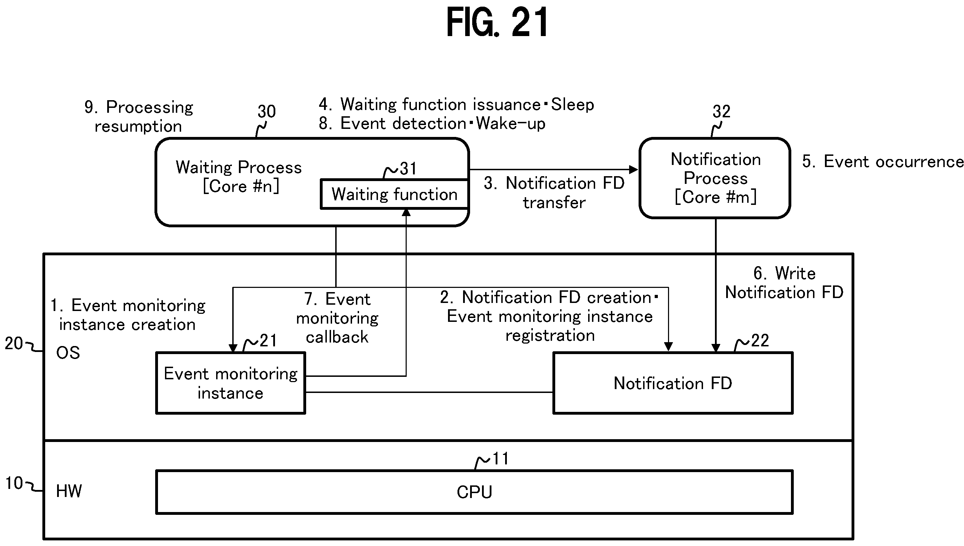

FIG. 21 is a diagram illustrating a notification system using eventfd + epoll_wait.

As illustrated in FIG. 21, a server includes hardware (HW) 10, an OS 20, and in a user space, a waiting process [core #n] 30 and a notification process [core #m] 32 . In FIG. 20, waiting process [core #n] 30 is "Process A" of APL [A: Waiting side] 1, and notification process [core #m] 32 is "Process B" of APL [B: Notifier side] 1.

Hardware (HW) 10 includes a CPU 11. Waiting process [core #n] 30 has a waiting function 31.

OS 20 includes an event monitoring instance 21 and a notification file descriptor (FD) 22. Notification FD 22 is an integer value that designates a file when requesting an access from OS 20. This is assigned when a file is operated from a program to discriminate • (hereinafter, "•" represents "and") identify the file to be operated.

In the existing technique, notification and wake-up are performed in a flow of 1. to 9. in FIG. 21.
1. Waiting process 30 ("Process A") creates an event monitoring instance 21 (eventpoll).
2. Waiting process 30 creates a notification FD 22 (eventfd), which is an FD used for notification, and registers the FD in event monitoring instance 21 of 1. above.
3. Waiting process 30 transfers notification FD 22 to a notification process 32 ("Process B"). With this, waiting process 30 ("Process A") and notification process 32 ("Process B") have agreed that notification FD 22 is to be used.
4. Waiting process 30 issues waiting function 31 (epoll_wait), specifying event monitoring instance 21 of the above 1., to enter a blocking (sleep) state. When issuing waiting function 31 (epoll_wait), waiting process 30 enters a sleep state until an event is issued. Waiting process 30 itself enters a sleep state, but in a case corresponding to a state in which no other process is loaded on the CPU core, that is, an idle state, an idle task appears when waiting process 30 enters sleep. This idle task automatically appears when there is no process, although the CPU core does nothing.
5. <Event occurrence>
6. Notification process 32 detects the occurrence of an event and performs writing into notification FD 22.
7. When writing is performed on notification FD 22, an event monitor callback runs (occurs).
8. When the event monitor callback occurs, an instruction is given to waiting function 31 waiting for event monitoring instance 21. Waiting function 31 having received the designation detects the event and wakes up.
9. Waiting process 30 that has called waiting function 31 resumes the processing.

Note that the creation of the notification FD in above 2. may be executed by notification process 32.

The existing technique will be further described.

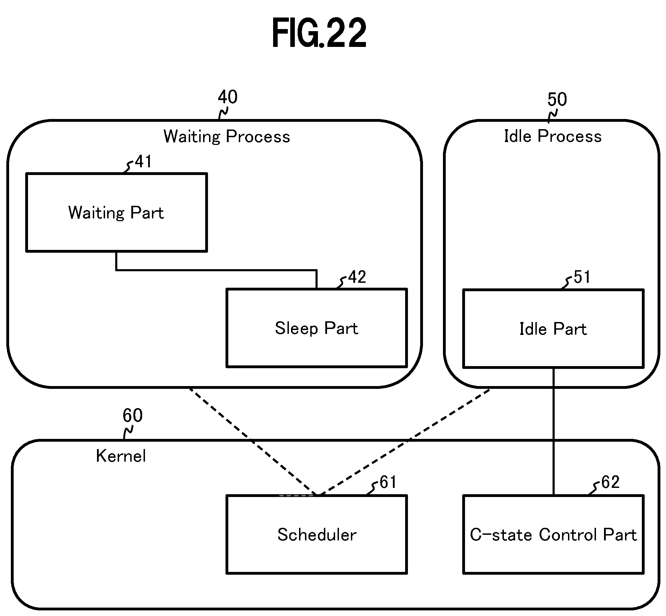

FIG. 22 is a diagram illustrating a waiting process of the existing technique described in Non-Patent Literature 1.

As illustrated in FIG. 22, a waiting process 40 includes a waiting part 41 and a sleep part 42, and an idle process 50 (idle task) includes an idle part 51. Furthermore, a kernel 60 of the OS includes a scheduler 61 and a C-state control part 62 (C-state will be described later).

Idle process 50 disappears when another process (thread) exists on the CPU core.

According to the power saving method of the existing technique, waiting part 41 calls sleep part 42 to cause the process (waiting process 40) to enter a wait state. When there is no other process in an executable state, scheduler 61 calls a process having idle part 51. Idle part 51 causes the CPU to transition to a sleep state or turns off the power by using C-state control part 62.

According to the existing technique, context switching always occurs. The term context switching refers to a process of saving/(hereinafter, "/" represents "or")restoring a state (context) of a CPU so that a plurality of processes can share one CPU.

According to the existing technique, the C-state restoration time is determined by the kernel. The kernel determines the depth of the C-state based on an idle time estimated by C-state control part 62. A restoration time from the corresponding C-state occurs (Non-Patent Literature 2).

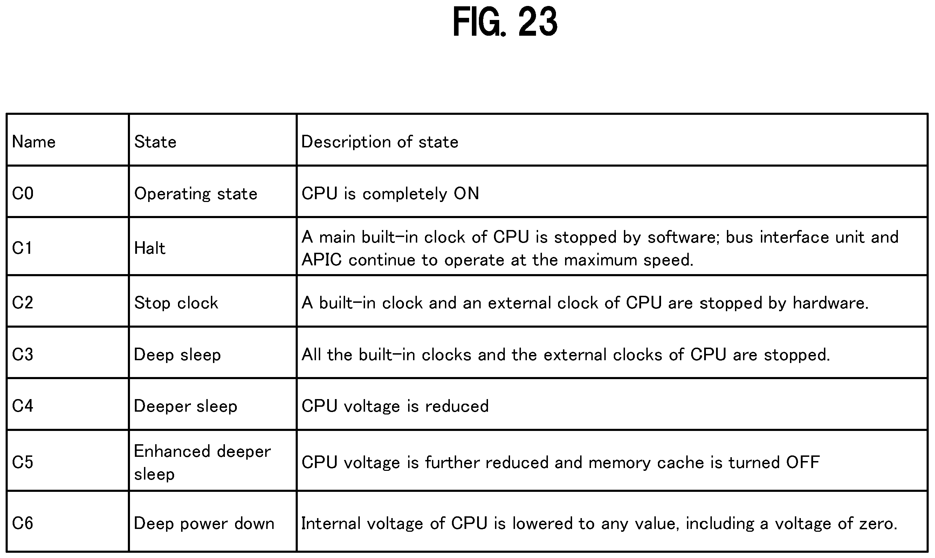

FIG. 23 is a diagram illustrating an example of C-states in the form of a table. Note that as the state definition varies depending on the CPU hardware, FIG. 23 is merely a reference example.

As illustrated in FIG. 23, CPUidle state has grades C0 to C6, and transitions to a deep sleep state occur as the time during which the CPU has no load becomes long. Although the power consumption of the CPU becomes less in the deeper sleep state, the time required until restoration is extended accordingly, which may possibly raise an issue in the perspective of low latency.

The state definition of C-state varies depending on the CPU hardware. For example, there are variations such that a certain model has no C4 or C5, a certain model has a state of C1E after C1, and the like.

As the state becomes deeper, the power saving effect becomes larger, but the time required for restoration from the idle state becomes longer accordingly.

In addition, the depth to which the CPUidle state transitions is controlled by the CPU hardware, which is dependent on the CPU product (often cannot be controlled by software such as a kernel).

### Citation List

### Non-Patent Literature

Non-Patent Literature 1: cpuidle-Do nothing, efficiently, [online], [Retrieved July 6, 2022], the Internet <URL: http://landley.net/kdocs/ols/2007/ols2007v2-pages-119-126.pdf>
Non-Patent Literature 2: CPU Analysis, [online] [Retrieved on July 6, 2022], the Internet <URL: https://docs.microsoft.com/ja-jp/windows-hardware/test/wpt/cpu-analysis>

### SUMMARY OF THE INVENTION

Problems to be Solved by the Invention

The existing technique has a problem of an increase in the latency time.

### (1) Increase in latency time due to context switch time

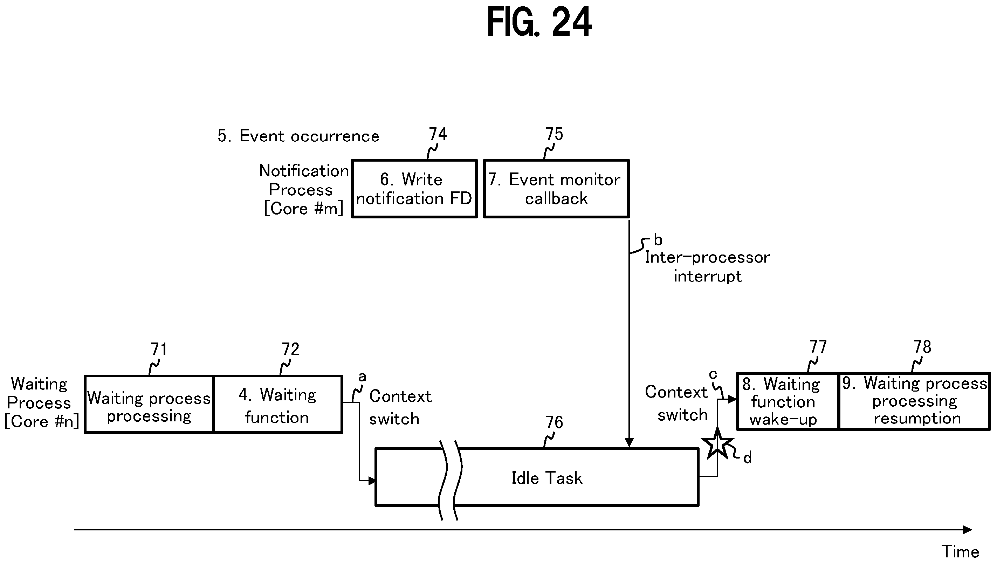

FIG. 24 is a diagram illustrating a problem of the existing technique.

The lower part of FIG. 24 is the schedule of a waiting process (core #n); and the upper part of FIG. 24 is the schedule of a notification process (core #m).

The following items 1. to 3. are assumed to have been executed at the time of initialization.
1. Creation of event monitoring instance
2. Creation of notification FD • registration of event monitoring instance
3. Transfer of notification FD

When the waiting process processing 71 enters a sleep state at 4., there is a possibility that an idle task will be scheduled for the pertinent CPU core. In FIG. 24, after the waiting process processing 71 and the waiting function 72 are executed, the event receiver (core #n) shifts to the idle task 76 by a context switch (reference sign a in FIG. 24). As described above, when the waiting process enters a sleep state, an idle task 76 appears if in an idle state where no other process is loaded on the pertinent CPU core. When the idle task 76 operates, the CPU core (event receiver (core #n)) falls stepwise into a deep sleep state (CPU idle), and thus the power consumption can be reduced.

On the other hand, when 5. an event occurs in the event sender (core #m), 6. writing notification FD 74 causes an execution of 7. event monitor callback 75, so that the event sender (core #m) performs an inter-processor interrupt (reference sign b in FIG. 24) on the event receiver (core #n).

When the waiting function wakes up at 8, the idle task 76 is scheduled again, and then the waiting function is scheduled via a context switch (reference sign c in FIG. 24) to proceed to 9. waiting process processing resumption (number 78 in FIG. 24).

The context switch generally switches between a state of operating in a kernel space and a state of operating in a user space.

A large latency occurs due to the context switch (reference sign c in FIG. 24) from the idle task 76 to the waiting function wake-up 77 (☆ symbol d in FIG. 24). That is, a context switch time at the time of switching to the waiting function occurs, so that a large latency occurs.

### (2) Increase in latency time due to restoration from sleep state (C-state)

Once a transition to a CPUidle state is made, the CPU causes stepwise or directly the sleep state to transition until the sleep state (C-state) allowed by the governor of the OS is reached.

If the governor of the OS allows a deep sleep state as a policy of the entire server (for example, C6), a long restoration time of 100 µs or more occurs until reverting to the operating state (C0) of the CPU.

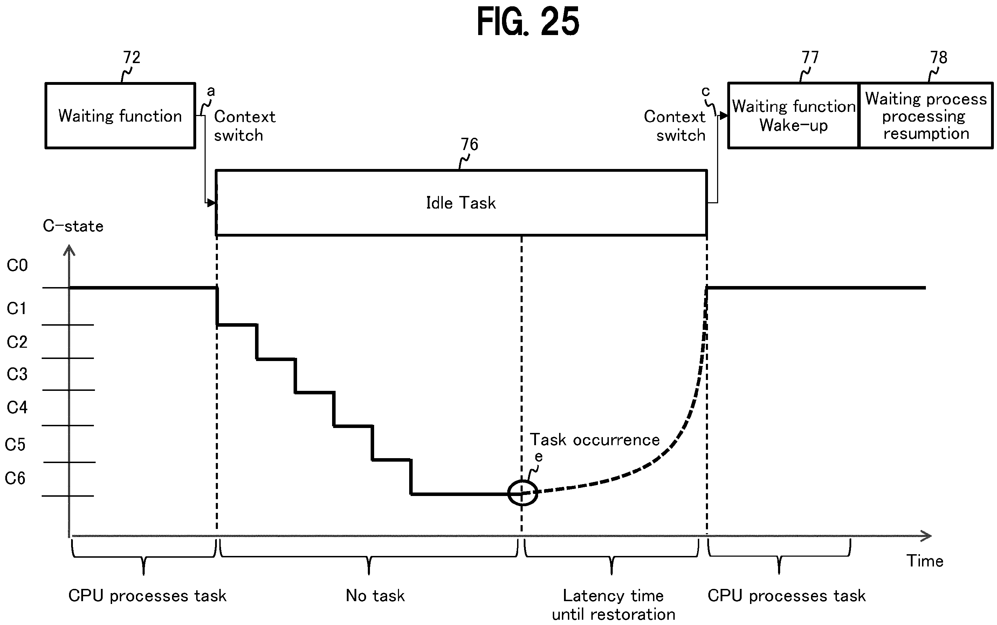

FIG. 25 is a diagram in which a C-state transition image of the CPU core used for operations is superimposed on the schedule in FIG. 24.

As illustrated in FIG. 25, when the no-task time is long, the CPU core is in a deep sleep state (CPUidle state: Grade C6), in which case the latency time until restoration after the occurrence (reference sign e in FIG. 25) of a task is extended. When the state falls into a deep CPU idle state, it takes a long time for the restoration, and there is a problem in that the real-time capability is impaired.

The above problem is a problem that is not allowed to be overlooked in a system in which real-time capability is prioritized like a base station (BBU).

Thus, in base stations (BBUs), a measure for invalidating the C-state or setting for limiting the transition of the idle state to a limited depth such as C1 is employed. That is, there are cases in which real-time capability oriented tuning is performed at the expense of power saving property.

The present invention has been made in view of such a background, and an object of the present invention is to reduce the time taken until a waiting process wakes up after the occurrence of an event.

### Solution to Problem

In order to solve the above-described problem, there is provided a computing system which comprises a processor composed of a plurality of cores and in which a process that executes a predetermined command using a time on the processor operates, wherein the process includes: a waiting process that transitions into and remains in a wait state until notified and wakes up to resume an operation when notified; and a notification process that transmits a notification to wake up the waiting process when an event occurs, and wherein the waiting process has a pseudo idle task that, when being in a waiting state, continues to occupy the processor.

### Advantageous Effects of Invention

According to the present invention, it is possible to reduce the time taken until a waiting process wakes up after the occurrence of an event.

### BRIEF DESCRIPTION OF THE DRAWINGS

[FIG. 1] FIG. 1 is a schematic configuration diagram of a computing system according to an embodiment of the present invention.
[FIG. 2] FIG. 2 is a diagram illustrating context switch elimination (Feature <1>) of the computing system according to the embodiment of the present invention.
[FIG. 3] FIG. 3 is a diagram illustrating an image of C-state transitions of a CPU core used for operations of the computing system according to the embodiment of the present invention, superimposed on a schedule of the CPU core.
[FIG. 4] FIG. 4 is a diagram illustrating the behavior of a waiting process in the cases of <when waiting starts>, <while waiting>, and <when event occurs> in a comparative example of the computing system according to the embodiment of the present invention.
[FIG. 5] FIG. 5 is a diagram illustrating the behavior of a waiting process in the cases of <when waiting starts>, <while waiting>, and <when event occurs> in the computing system according to the embodiment of the present invention.
[FIG. 6] FIG. 6 is a diagram illustrating the behavior of a waiting process in the cases of <when waiting starts>, <while waiting>, and <when event occurs> in a comparative example of the computing system according to the embodiment of the present invention.
[FIG. 7] FIG. 7 is a diagram illustrating the behavior of a waiting process in the cases of <when waiting starts>, <while waiting>, and <when event occurs> in the computing system according to the embodiment of the present invention.
[FIG. 8] FIG. 8 is a diagram illustrating an implementation image in a comparative example of the computing system according to the embodiment of the present invention.
[FIG. 9] FIG. 9 is a diagram illustrating an implementation image of the computing system according to the embodiment of the present invention.
[FIG. 10] FIG. 10 is a diagram illustrating an application scope 1 of the computing system according to the embodiment of the present invention.
[FIG. 11] FIG. 11 is a diagram illustrating an application scope 2 of the computing system according to the embodiment of the present invention.
[FIG. 12] FIG. 12 is a sequence in a case where a pseudo idle function prior to occurrence of event is necessary in the computing system according to the embodiment of the present invention.
[FIG. 13] FIG. 13 is a sequence in a case where a pseudo idle function prior to occurrence of event is unnecessary in the computing system according to the embodiment of the present invention.
[FIG. 14] FIG. 14 is a sequence in a case where a pseudo idle function after occurrent of event is necessary in the computing system according to the embodiment of the present invention.
[FIG. 15] FIG. 15 is a flowchart of executing a pseudo idle function in a pseudo idle determination part of the computing system according to the embodiment of the present invention.
[FIG. 16] FIG. 16 is a flowchart of determining a maximum restoration time by a restoration time determination part of the computing system according to the embodiment of the present invention.
[FIG. 17] FIG. 17 is a diagram illustrating an operation example in a case where maximum restoration time determination processing of the computing system according to the embodiment of the present invention is executed.
[FIG. 18] FIG. 18 is a hardware configuration diagram illustrating an example of a computer that implements the functions of a task scheduler device of a computing system according to the embodiment of the present invention.
[FIG. 19] FIG. 19 is a diagram illustrating inter-process communication in a server according to a polling scheme.
[FIG. 20] FIG. 20 is a diagram illustrating inter-process communication in a server according to a notification scheme.
[FIG. 21] FIG. 21 is a diagram illustrating a notification system using eventfd + epoll_wait.
[FIG. 22] FIG. 22 is a diagram illustrating a waiting process of an existing technique.
[FIG. 23] FIG. 23 is a diagram illustrating an example of C-states in the form of a table.
[FIG. 24] FIG. 24 is a diagram illustrating a problem of the existing technique.
[FIG. 25] FIG. 25 is a diagram in which a C-state transition image of the CPU core used for operations is superimposed on the schedule in FIG. 24.

### MODES FOR CARRYING OUT THE INVENTION

Hereinafter, a computing system and the like in a mode for carrying out the present invention (hereinafter, referred to as "the present embodiment") will be described with reference to the drawings.

### [Overview]

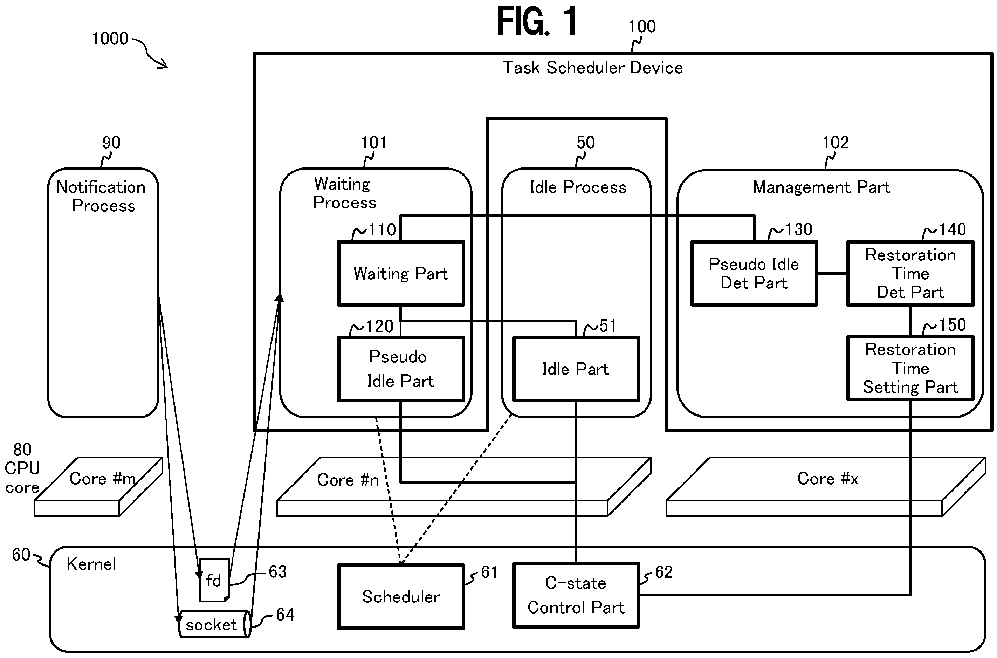

FIG. 1 is a schematic configuration diagram of a computing system according to the embodiment of the present invention. The same components as those in FIG. 22 are denoted by the same reference signs.

The present embodiment is an example applied to a CPU as a computing system. In addition to the CPU, the present invention can be similarly applied to a processor such as a graphic processing unit (GPU), a field programmable gate array (FPGA), and an application specific integrated circuit (ASIC) when the processor is equipped with an idle state function.

As illustrated in FIG. 1, a computing system 1000 includes a kernel 60, CPU cores (core #m, core #n, and core #x) 80, a notification process 90, an idle process 50, and a task scheduler device 100.

Kernel 60 includes a scheduler 61, a C-state control part 62, a file descriptor (fd) 63 such as eventfd, and a socket (communication socket) 64 such as Unix Domain Socket.

Idle process 50 includes an idle part 51. Idle process 50 allows, while waiting, another process (thread) to use the pertinent CPU core.

Computing system 1000 is a computing system which includes a processor composed of a plurality of cores and in which a process executing predetermined commands using a time on the processor operates, the process including: a waiting process 101 that transitions into and remains in a wait state until notified and wakes up and resumes an operation when notified, a notification process 90 that, upon occurrence of an event, transmits a notification to wake up the waiting process, and an idle process 50 that occurs when there is no process on the processor and executes nothing.

### [Task Scheduler Device 100]

Task scheduler device 100 includes a waiting part 110, a pseudo idle part 120, a pseudo idle determination part 130, a restoration time determination part 140 (restoration time control part), and a restoration time setting part 150 (restoration time control part).

Waiting part 110 and pseudo idle part 120 constitute a waiting process 101 to cooperate with idle part 51 of idle process 50 (idle task).

Pseudo idle determination part 130, restoration time determination part 140, and restoration time setting part 150 constitute a management part 102.

Waiting process 101 transitions into and remains in a wait state until notified, and wakes up and resumes an operation when notified.

Waiting part 110 remains in an executable state. Waiting part 110, upon reception of a pseudo idle function request from pseudo idle determination part 130, configures a wait setting and an executable state setting. Specifically, waiting part 110, according to an instruction from pseudo idle determination part 130, executes pseudo idle part 120 or performs context switching to an idle process having an idle function.

Pseudo idle part 120 remains in a sleep (NOP) state in which pseudo idle part 120 executes nothing. Pseudo idle part 120, as a substitute of idle part 51, calls and executes C-state control part 62 that controls the operating state of the CPU.

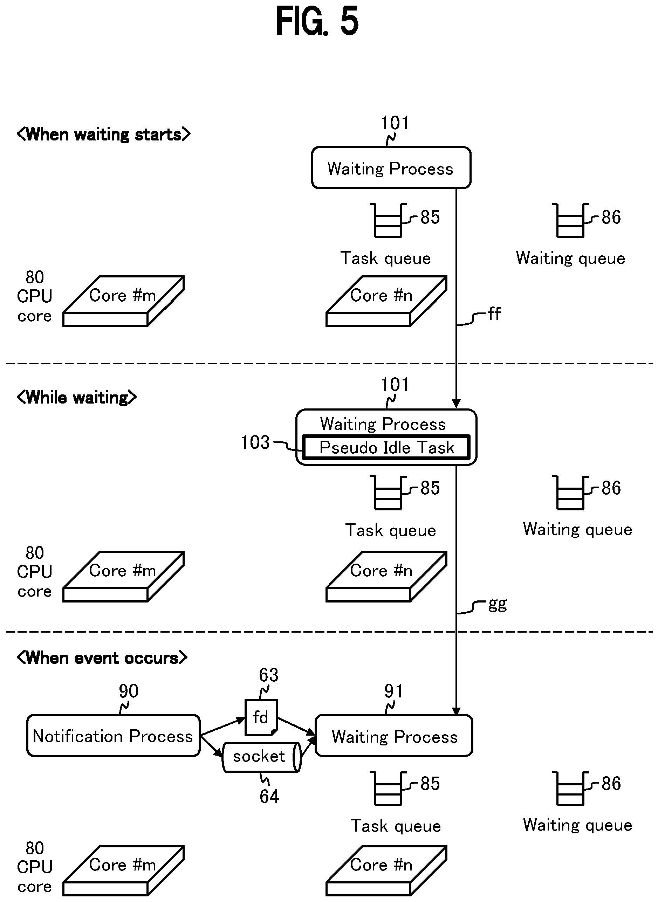

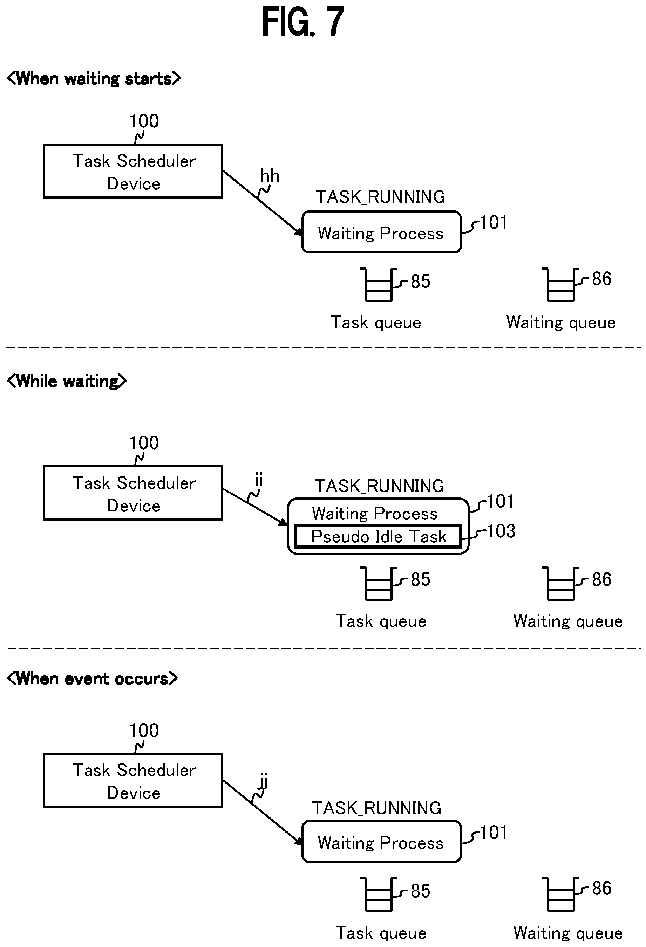

Pseudo idle part 120 has a pseudo idle task 103 (FIGS. 5 and 7) such that, when being in a waiting state, waiting process 101 continues to occupy the processor.

Here, the scheduler of the Kernel gives an execution time to waiting process 101 when an event occurs. As pseudo idle task 103 having been executed immediately before is being executed as extension of the waiting process, it is possible to eliminate context switching associated with process switching.

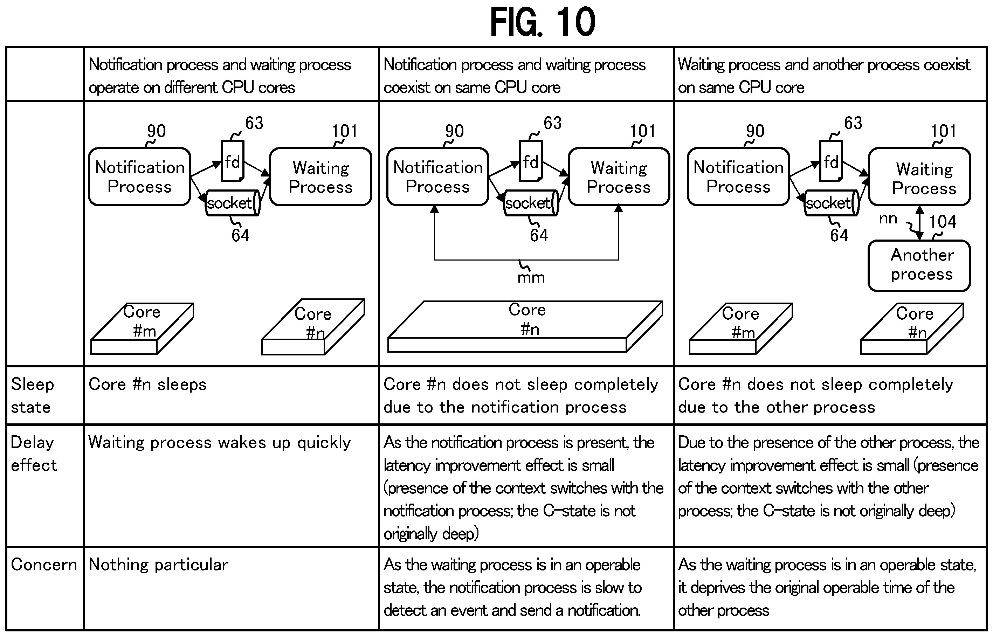

Pseudo idle determination part 130 determines whether to execute pseudo idle part 120 (pseudo idle task) based on a process occurrence state on the same processor and/or a requirement of the latency time, to be instructed to waiting part 110. Here, the reason why it is necessary to determine whether to execute pseudo idle part 120 is that, as will be described later with reference to FIG. 10, in a situation where the notification process and the waiting process are operating on the same CPU core, there is no effect of operating the pseudo idle part to eliminate context switching and there is a possibility of affecting other processes, such as an increase in the processing delay.

Restoration time determination part 140 determines a restoration time corresponding to a C-state to which pseudo idle part 120 can fall at the maximum based on the requirement of the latency time and the current C-state. Restoration time determination part 140 notifies restoration time setting part 150 of the maximum restoration time.

Restoration time setting part 150 sets the maximum restoration time to C-state control part 62 using the maximum restoration time from restoration time determination part 140. Restoration time setting part 150 reverts the maximum restoration time to its original again after pseudo idle part 120 finishes.

Above-described restoration time determination part 140 and restoration time setting part 150 constitute a restoration time setting part that sets a restoration time until pseudo idle task 103 is restored after the occurrence of a task. This restoration time control part is a functional part that overwrites a determined restoration time with the maximum restoration time and configures the maximum restoration time short, so that a transition to a deep sleep state is not caused.

Hereinafter, the operation of computing system 1000 configured as described above will be described.

### [Basic Concept of Operation of Task Scheduler Device 100]

### Feature <1>: Context switch elimination

The waiting process is caused to behave the same as an idle task, to eliminate the context switching from the idle task.

As the waiting function operates equivalently to the idle task in its context, no context switching to the existing idle task occurs. Thus, <Requirement 1: Reduction of Notification Time> is satisfied.

Similarly to the idle task, while the waiting function operates, the CPU core can fall into a deep sleep state. With this, <Requirement 2: Power Saving Property> is satisfied.

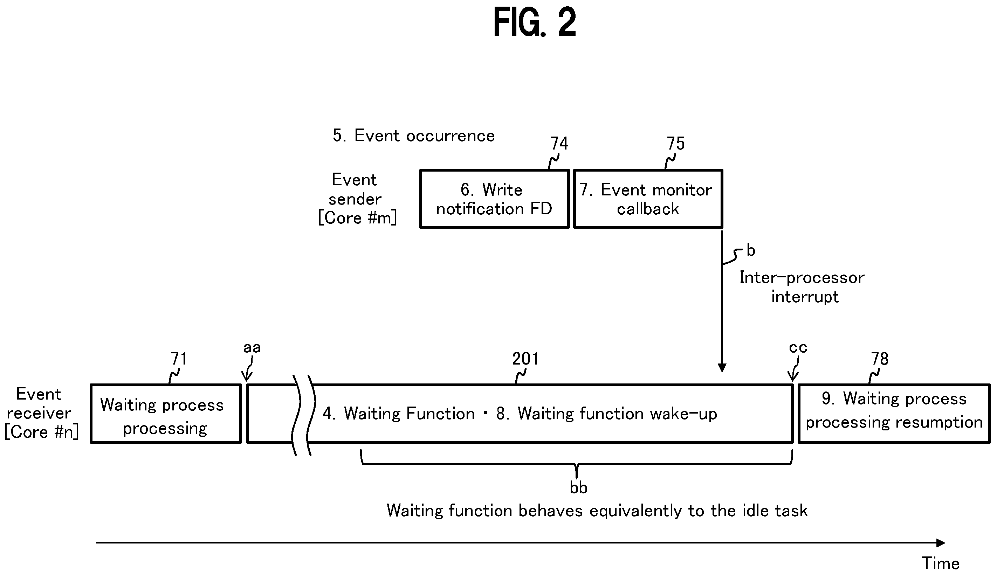

FIG. 2 is a diagram illustrating context switch elimination (Feature <1>). The same processes as those in FIG. 24 are denoted by the same reference signs.

The lower part of FIG. 2 is the schedule of an event receiver (core #n), and the upper part of FIG. 2 is the schedule of an event sender (core #m).

The following items 1. to 3. are assumed to have been executed at the time of initialization.
1. Creation of event monitoring instance
2. Creation of notification FD • registration of event monitoring instance
3. Transfer or notification FD

After the waiting process processing 71, the event receiver (core #n) proceeds to 4. waiting function • 8. waiting function wake-up 201 without causing a transition to the idle task (without causing context switching) (reference sign aa in FIG. 2). That is, in waiting function • waiting function wake-up 201, 4. waiting function behaves equivalently to the idle task (reference sign bb in FIG. 2).

On the other hand, when 5. an event occurs in the event sender (core #m), 6. notification FD writing 74 causes execution of 7. event monitor callback 75, where the event sender (core #m) performs an inter-processor interrupt (reference sign b in FIG. 2) on the event receiver (core #n).

As 4. waiting function behaves equivalently to the idle task, scheduling of the idle task is not executed in 8. waiting function wake-up. Thus 9. waiting process processing resumption 78 follows without an occurrence of context switching (reference sign cc in FIG. 2).

As the waiting function operates equivalently to the idle task in its context, context switching (reference sign c in FIG. 24) to the existing idle task does not occur. With this, <Requirement 1: Reduction of Notification Time> can be satisfied.

Here, although not illustrated in FIG. 2, the CPU core can fall into a deep sleep state while the waiting function operates, similarly to the idle task (number 76 in FIG. 24). With this, <Requirement 2: Power Saving Property> can be satisfied.

### Feature <2>: Designation of restoration time of pseudo idle task

A maximum restoration time of the pseudo idle task is designated to control not to cause a fall to a deep sleep state.

The restoration time determined by the governor of the OS is overwritten with the maximum restoration time, and the maximum restoration time is configured short. Accordingly, the computing system does not transition to a deep sleep state, so it is possible to shorten the latency time until the waiting function wakes up. With this, <Requirement 1: Reduction of Notification Time> is satisfied.

On the other hand, by setting the maximum restoration time long, it is also possible to cause a transition to a deep sleep state and further reduce the power in the HW. With this, <Requirement 2: Power Saving Property> is satisfied.

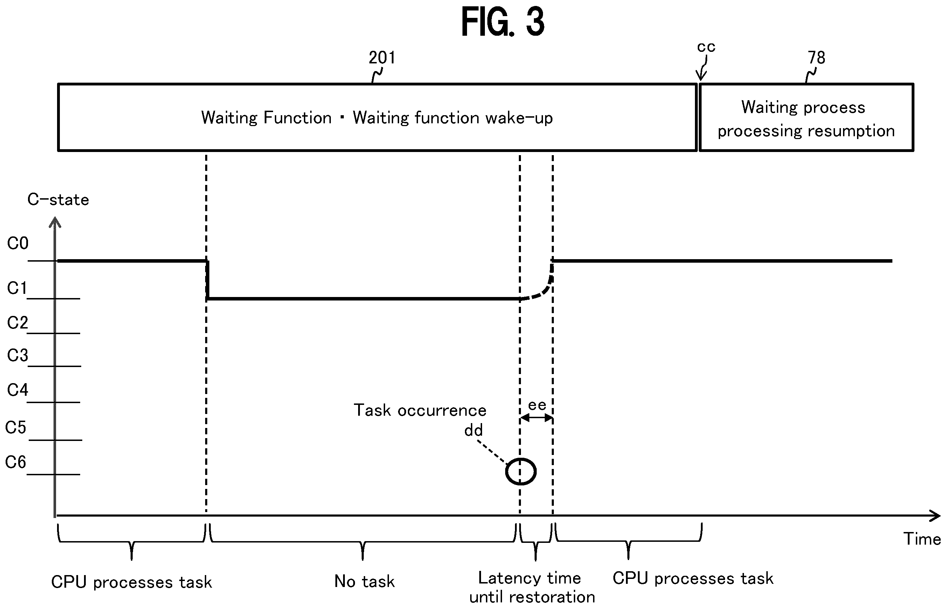

FIG. 3 is a diagram in which an image of C-state transition of a CPU core used for operation is superimposed on the schedule of FIG. 2. The same processes as those in FIG. 25 are denoted by the same reference signs.

As illustrated in FIG. 3, a restoration time maximum value (reference sign ee in FIG. 3) from the occurrence of a task (reference sign dd in FIG. 3) to the restoration is designated. The reason why such designation of the restoration time maximum value is possible is that the waiting function • waiting function wake-up 201 in which the waiting function behaves equivalently to the idle task is provided and that the schedule of the waiting function • waiting function wake-up 201 can have a degree of freedom.

Regarding the designation of the restoration time maximum value, when the maximum restoration time is set short, as the CPU core falls into a shallow sleep state, the power reduction is small. When the maximum restoration time is set long, as the CPU core falls into a deep sleep state, the power reduction is large. However, when the CPU core falls into a deep sleep state, it takes time to restore.

### [Operation of Task Scheduler Device 100]

### [Operation 1]

A description will be given of Operation 1 of task scheduler device 100 in comparison with a comparative example (existing technique).

First, an operation of the comparative example (existing technique) will be described.

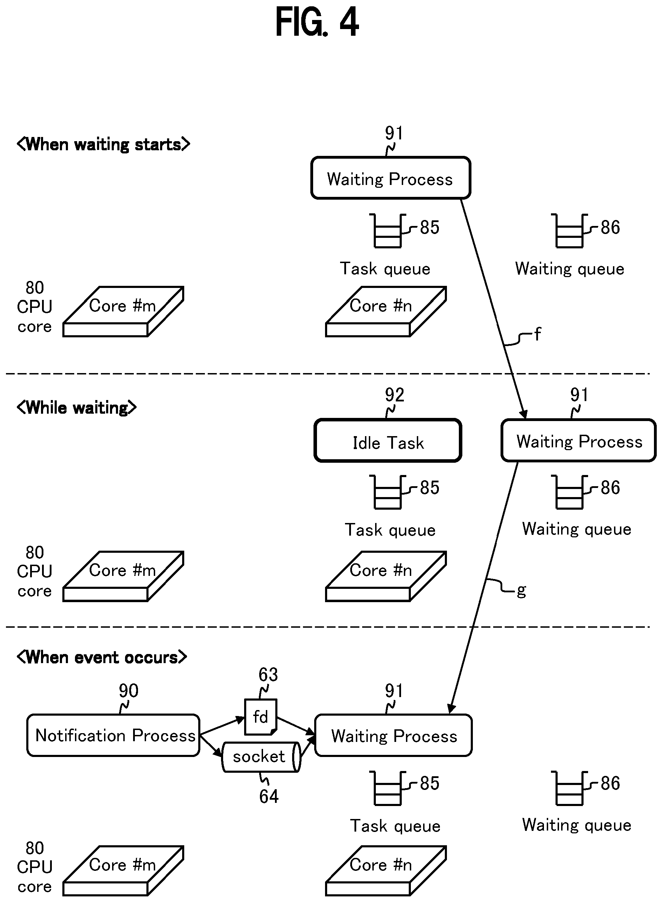

FIG. 4 is a diagram illustrating the behavior of a waiting process in the cases of <when waiting starts>, <while waiting>, and <when event occurs> in the comparative example. The same configurations • processes as those in FIG. 1 are denoted by the same reference signs.

### <When waiting starts>

The server includes a CPU core 80 (event receiver (core #n)) and a CPU core 80 (event sender (core #m)). When waiting starts, a waiting process 91 is in a task queue 85 on CPU core 80 (core #n).

### <While waiting>

What is called wait state means that, on CPU core 80 (core #n), waiting process 91 enters a waiting queue 86.

While waiting, waiting process 91 exits (arrow f in FIG. 4) from task queue 85 and enters waiting queue 86 on the right side of FIG. 4 to be in a wait state.

Here, in a case corresponding to a state in which no other process is loaded on CPU core 80 (core #n), that is, an idle state, an idle task 92 appears on CPU core 80 (core #n). This idle task 92 is a process (task) that automatically appears so that task queue 85 does not become empty.

### <When event occurs>

At the time when the kernel mode detects an event issuance, upon reception of a notification from a notification process 90 via an fd 63 and a socket 64 of kernel 60 (FIG. 1), waiting process 91 returns (arrow g in FIG. 4) to task queue 85 in the center of FIG. 4 again. When waiting process 91 returns to task queue 85, a context switch between idle task 92 and waiting process 91 occurs (reference sign c in FIG. 24).

Next, a description will be given of an operation of the present embodiment.

FIG. 5 is a diagram illustrating the behavior of the waiting process in the cases of <when waiting starts>, <while waiting>, and <when event occurs> in the present embodiment. The same configurations • processes as those in FIGS. 1 and 4 are denoted by the same reference signs.

### <When waiting starts>

A server includes a CPU core 80 (event receiver (core #n)) and a CPU core 80 (event sender (core #m)). A waiting process 101 is in a task queue 85 on CPU core 80 (core #n). At the time <when waiting starts>, the behavior of the waiting process is the same between the present embodiment and the comparative example.

### <While waiting>

As described for the comparative example in FIG. 4, in the returning of waiting process 91 to task queue 85, a context switch between idle task 92 and waiting process 91 occurs (reference sign c in FIG. 24). In order to solve this problem, idle task 92 is to be prevented from occurring.

In view of this, in the present embodiment, waiting process 101 includes waiting part 110 and pseudo idle part 120 (FIG. 1). That is, waiting process 101 further introduces pseudo idle part 120 (pseudo idle task 103) into waiting process 91 of FIG. 4. In order not to prevent idle task 92 from occurring, pseudo idle task 103 continues to occupy CPU core 80 (core #n) so as not to cause waiting process 101 to enter the task queue 85. That is, with the introduction of pseudo idle task 103, the corresponding CPU core is continuously occupied without yielding the corresponding CPU core to other processes. More specifically, the occupation of the CPU core means continuously occupying the CPU core without yielding CPU time. Specifically, pseudo idle task 103 issues an epoll, but continues to occupy the CPU time without yielding CPU time to other processes (threads).

As indicated by reference sign ff in FIG. 5, waiting process 101 continues to remain in task queue 85. That is, in the comparative example of FIG. 4, while waiting, waiting process 91 exits from task queue 85 and enters waiting queue 86 to be in the wait state. On the other hand, in the present embodiment, although pseudo idle task 103 issues an epoll, pseudo idle task 103 continues to occupy the CPU time without yielding CPU time to other processes (threads), so that waiting process 101 continues to remain in the task queue.

With this, as pseudo idle task 103 continues to occupy CPU core 80 (core #n), waiting process 101 is able to continue to remain in task queue 85, and thus no context switch occurs.

Further, as described regarding the comparative example in FIG. 4, as idle task 92 is in task queue 85, CPU core 80 (core #n) is able to shift to an idle state.

Pseudo idle task 103 of the present embodiment operates in a manner analogous to idle task 92. Pseudo idle task 103 is a task that does basically nothing similarly to idle task 92. However, due to the existence of pseudo idle task 103 performing the same operation as idle task 92, pseudo idle task 103 is able to cause the CPU to execute a sleep (NOP) command. With this, it is possible to reduce the CPU cycle and reduce the power consumption of the CPU core.

### <When event occurs>

At the time when the kernel mode detects an event issuance, waiting process 101 receives a notification from notification process 90 via an fd 63 and a socket 64 of kernel 60 (FIG. 1). As waiting process 101 continues to remain (reference sign gg in FIG. 5) in task queue 85, at the time when waiting process 101 receives the notification when the kernel mode detects an event issuance, waiting process 101 is already in task queue 85. Thus, no context switch occurs (reference sign cc in FIG. 2).

### [Operation 2]

A description will be given of Operation 2 of task scheduler device 100 in comparison with a comparative example (existing technique).

First, an operation of the comparative example (existing technique) will be described.

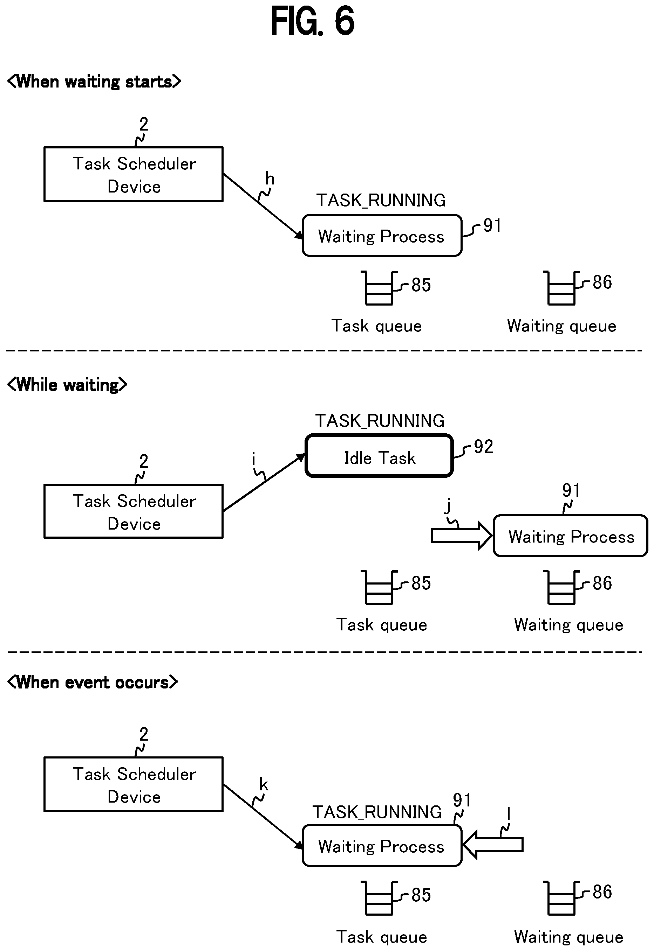

FIG. 6 is a diagram illustrating the behavior of the waiting process in the cases of <when waiting starts>, <while waiting>, and <when event occurs> in the comparative example. The same configurations • processes as those in FIG. 4 are denoted by the same reference signs.

It is assumed that task scheduler device 100 allocates a CPU execution time to a process in an executable state (TASK_RUNNING) in task queue 85.

### <When waiting starts>

As only the waiting process exists in task queue 85, task scheduler device 100 gives (reference sign h in FIG. 6) an execution time to the waiting process.

### <While waiting>

When task queue 85 becomes empty, an idle task 92 is generated and task scheduler device 100 gives an execution time to idle task 92. At this time, a context switch occurs (reference sign i in FIG. 6). Furthermore, while waiting, waiting process 91 exits (arrow j in FIG. 6) from task queue 85 and enters waiting queue 86 to be in a wait state.

### <When event occurs>

When waiting process 91 is called at the time of the occurrence of an event, task scheduler device 100 gives an execution time to waiting process 91. At this time, a context switch occurs (reference sign k in FIG. 6). In addition, waiting process 91 returns (arrow l in FIG. 4) to task queue 85 in the center of FIG. 6 again.

Next, an operation of the present embodiment will be described.

FIG. 7 is a diagram illustrating the behavior of the waiting process in the cases of <when waiting starts>, <while waiting>, and <when event occurs> in the present embodiment. The same configurations • processes as those in FIG. 5 are denoted by the same reference signs.

It is assumed that task scheduler device 100 allocates a CPU execution time to a process in an executable state (TASK_RUNNING) in task queue 85.

### <When waiting starts>

As only waiting process 101 exists in task queue 85, task scheduler device 100 gives (reference sign hh in FIG. 7) an execution time to waiting process 101.

### <While waiting>

As waiting process 101 remains in the executable state, task scheduler device 100 gives (reference sign ii in FIG. 7) an execution time to waiting process 101. That is, as pseudo idle task 103 continues to occupy CPU core 80 (core #n) (see <while waiting> in FIG. 5), waiting process 101 is able to continue to remain in task queue 85, and thus no context switch occurs.

### <When event occurs>

When waiting process 101 is called at the time of the occurrence of an event, task scheduler device 100 gives (reference sign jj in FIG. 7) an execution time to waiting process 101.

### [Implementation Image]

An implementation image of task scheduler device 100 will be described in comparison with a comparative example (existing technique).

First, a description will be given of an implementation image of the comparative example (existing technique).

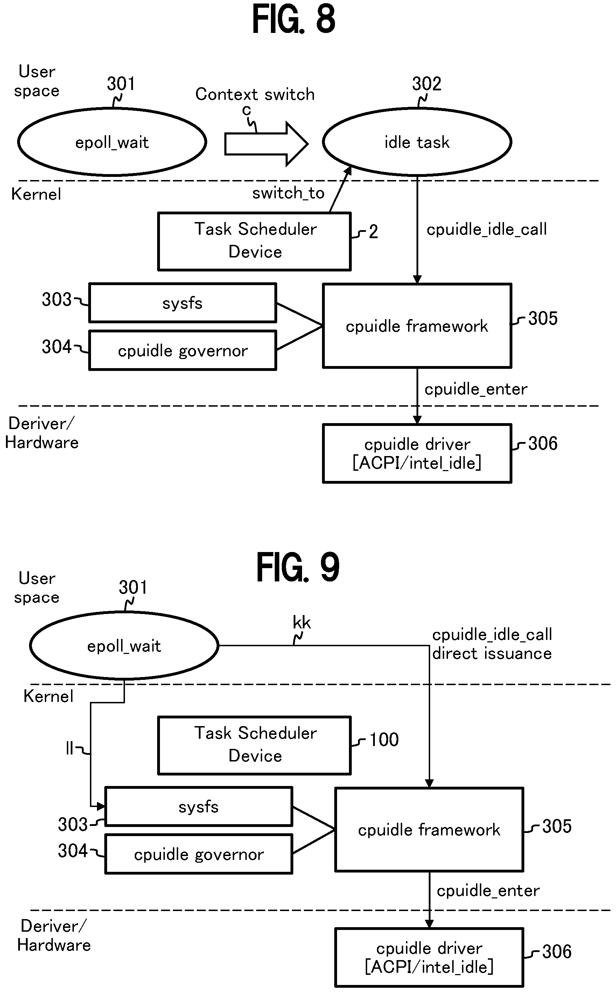

FIG. 8 is a diagram illustrating an implementation image in the comparative example.

As illustrated in FIG. 8, the driver/hardware includes a cpuidle driver (ACPI/intel_idle) 306. The kernel includes a task scheduler device 100, a sysfs 303, a cpuidle governor 304, and a cpuidle framework 305. The user space has an epoll_wait 301 and an idle task 302.

When the waiting function (epoll_wait 301) enters a wait state (idle task 302), task scheduler device 100 switches the process using the kernel function switch_to. A context switch (reference sign c in FIG. 8) for switching from epoll_wait 301 to idle task 302 is executed.

FIG. 9 is a diagram illustrating an implementation image of the present embodiment.

As illustrated in FIG. 9, the driver/hardware includes cpuidle driver (ACPI/intel_idle) 306. The kernel includes task scheduler device 100, sysfs 303, cpuidle governor 304, and cpuidle framework 305. The user space has an epoll _wait 301 and an idle task 302.

Regarding task scheduler device 100, a waiting function (epoll_wait 301) directly issues cpuidle_idle_call to cpuidle framework 305. At this time, the waiting function (epoll_wait 301) itself remains in the executable state, that is, does not enter a wait state. In addition, as there is no other process, task scheduler device 100 has no other process as a destination of switching. Accordingly, task scheduler device 100 causes the waiting function (epoll_wait 301) to use time always.

Note that, in the direct issuance of cpuidle_idle_call by the waiting function (epoll_wait 301), a maximum restoration time may be designated.

In addition, the waiting function (epoll_wait 301) may designate (reference sign ll in FIG. 9) the maximum restoration time to sysfs 303 of the kernel via sysfs 303.

The configuration where task scheduler device 100 causes the waiting function (epoll_wait 301) to use time always in the executable state corresponds to the configuration where "pseudo idle task 103 issues an epoll, but continues to occupy the CPU time without yielding the CPU time to other processes (threads)", described regarding <While waiting> in FIG. 5.

### [Scope of Application]

### [Application Scope 1]

A description will be given of the scope of application of task scheduler device 100.

Waiting process 101 can also operate even on the same CPU core as notification process 90 and other processes. On the other hand, in order to maximize the effect, it is desirable that waiting process 101 be on a CPU core different from notification process 90 and other processes.

FIG. 10 is a diagram illustrating an application scope 1 of task scheduler device 100. The same processes as those in FIG. 1 are denoted by the same reference signs.

### <Notification process and waiting process operate on different CPU cores> (left diagram in FIG. 10)

It is applicable to cases where notification process 90 and waiting process 101 operate on different CPU cores (core #m and core #n).
- Sleep state: Core #n sleeps.
- Delay effect: The waiting process wakes up fast.
- Concern: No particular concern.

### <Notification process and waiting process coexist on the same CPU core> (middle diagram in FIG. 10)

It is applicable to cases where notification process 90 and waiting process 101 coexist on the same CPU core (core #n). Notification process 90 and waiting process 101 compete for CPU time (reference sign mm in the middle diagram in FIG. 10).
- Sleep state: Core #n does not sleep completely due to notification process 90.
- Delay effect: As notification process 90 is present, the latency improvement effect is small (presence of the context switch with notification process 90; the C-state is not originally deep).
- Concern: As waiting process 101 is in an operable state, notification process 90 is slow to detect an event and send a notification.

### <Waiting process and another process coexist on the same CPU core> (right diagram in FIG. 10)

It is applicable to cases where waiting process 101 and another process 104 coexist on the same CPU core (core #n). The notification process 90 and waiting process 101 compete for CPU time (reference sign nn in the right diagram of FIG. 10).
- Sleep state: Core #n does not sleep completely due to the other process 104.
- Delay effect: Due to the presence of the other process 104, the latency improvement effect is small (presence of the context switches with the other process 104; the C-state is not originally deep).
- Concern: As waiting process 101 is in an operable state, it deprives the original operable time of the other process 104.

### [Application Scope 2]

It is applicable to notification process 90 and waiting process 101 anywhere in the user space/kernel space.

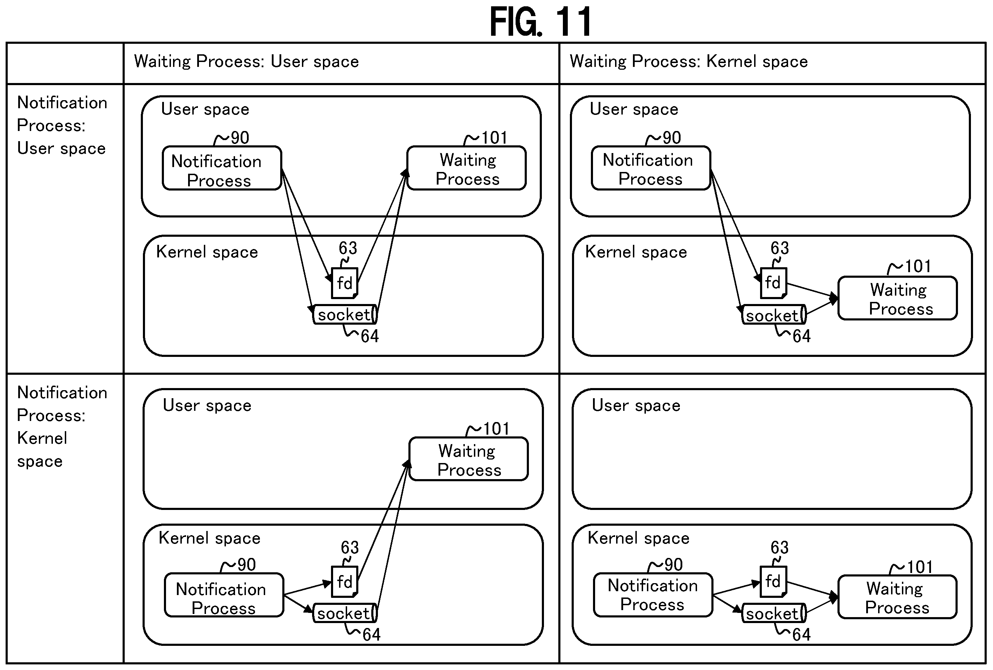

FIG. 11 is a diagram illustrating an application scope 2 of task scheduler device 100. The same processes as those in FIGS. 1 and 10 are denoted by the same reference signs.

The upper left diagram in FIG. 11 is an example of a case where the notification process is in the user space and the waiting process is in the user space.

The upper right diagram in FIG. 11 is an example of a case where the notification process is in the user space and the waiting process is in the kernel space.

The lower left diagram in FIG. 11 is an example of a case where the notification process is in the kernel space and the waiting process is in the user space.

The lower right diagram of FIG. 11 is an example of a case where the notification process is in the kernel space and the waiting process is in the kernel space.

As described above, notification process 90 and waiting process 101 can be arranged in either the user space or the Kernel space.

### [Application Scope 3]

Examples of the file descriptor to be used for the notification include eventfd, singalfd, timerfd, and the like.

Examples of the waiting function for monitoring a resource include read(), select(), poll(), and epoll(). Any of the functions performs a blocking or non-blocking operation, but at the time of blocking, the function falls into a state of event waiting of
TASK_INTERRUPTIBLE/TASK_UNINTERRUPTIBLE, and thus the present invention can be applied.

### [Control Sequence]

A description will be given of a control sequence of task scheduler device 100.

### [Control Sequence 1]

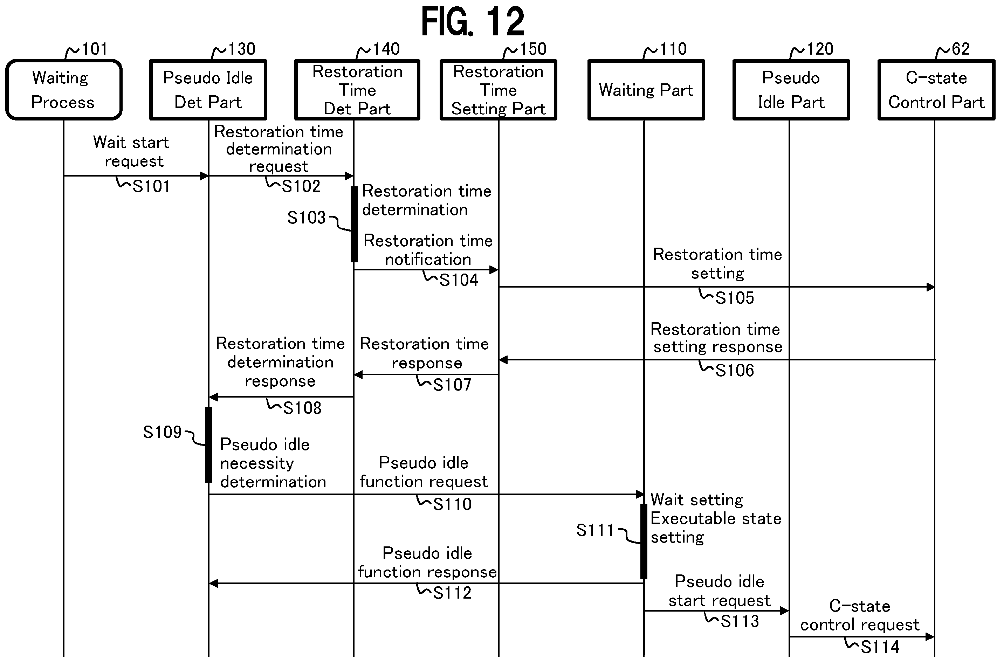

FIG. 12 illustrates a sequence in a case where the pseudo idle function prior to occurrence of event is necessary.

Waiting process 101 requests (S101) pseudo idle determination part 130 to start waiting.

Pseudo idle determination part 130 requests (S102) restoration time determination part 140 to determine a restoration time.

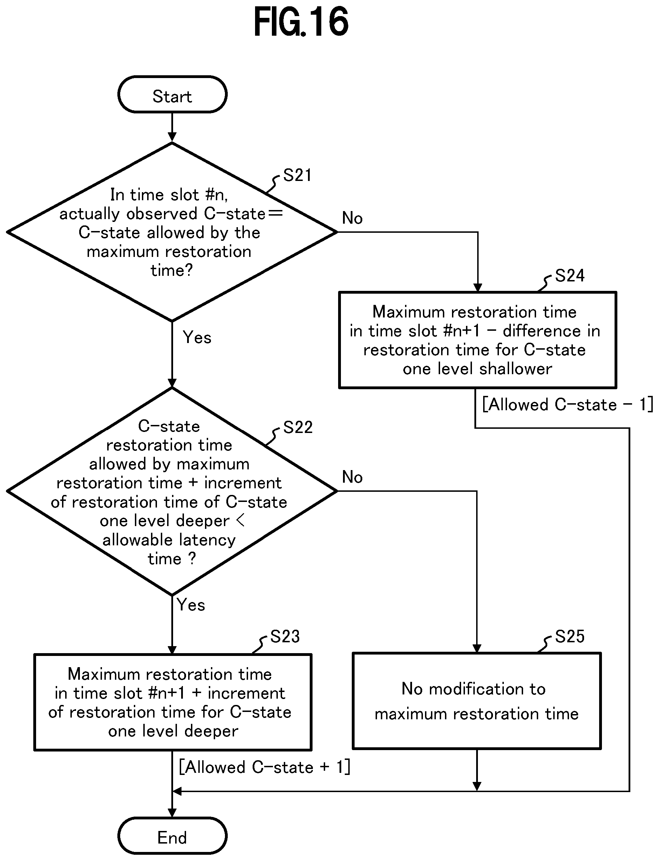

Restoration time determination part 140 determines (S103) the restoration time. A detailed flow of the restoration time determination in step S 103 will be described later with reference to FIG. 16.

Restoration time determination part 140 notifies (S104) restoration time setting part 150 of the restoration time.

Restoration time setting part 150 applies (S1051) a restoration time setting to C-state control part 62.

C-state control part 62 responds (S106) to restoration time setting part 150 with a response to the restoration time setting.

Upon reception of the restoration time setting response from C-state control part 62, restoration time setting part 150 responds (S107) to restoration time determination part 140 with a response regarding the restoration time.

Restoration time determination part 140 notifies (S108) pseudo idle determination part 130 of a restoration time determination response from restoration time setting part 150.

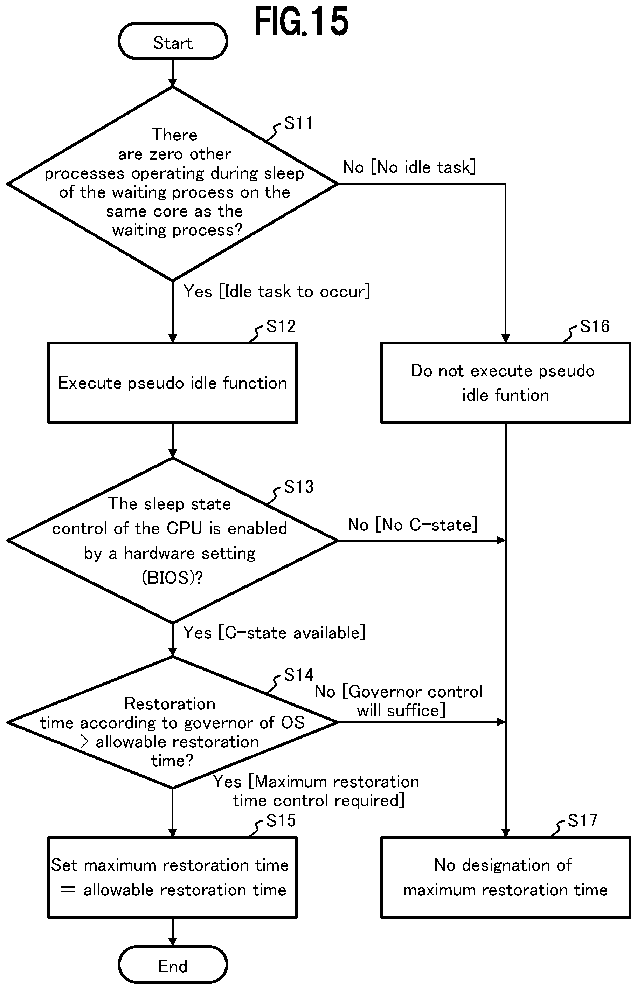

Pseudo idle determination part 130 makes (S109) a pseudo idle function necessity determination. A detailed flow of the pseudo idle function necessity determination in step S109 will be described later with reference to FIG. 15.

Pseudo idle determination part 130 makes (S110) a pseudo idle function request to waiting part 110 of waiting process 101.

Upon reception of the pseudo idle function request from pseudo idle determination part 130, waiting part 110 configures (S111) a wait setting and an executable state setting.

Waiting part 110 notifies (S112) pseudo idle determination part 130 of a pseudo idle function response to the pseudo idle function request.

Waiting part 110 requests (S113) pseudo idle part 120 to start pseudo idling.

Pseudo idle part 120 requests (S114) C-state control part 62 to perform C-state control.

### [Control Sequence 2]

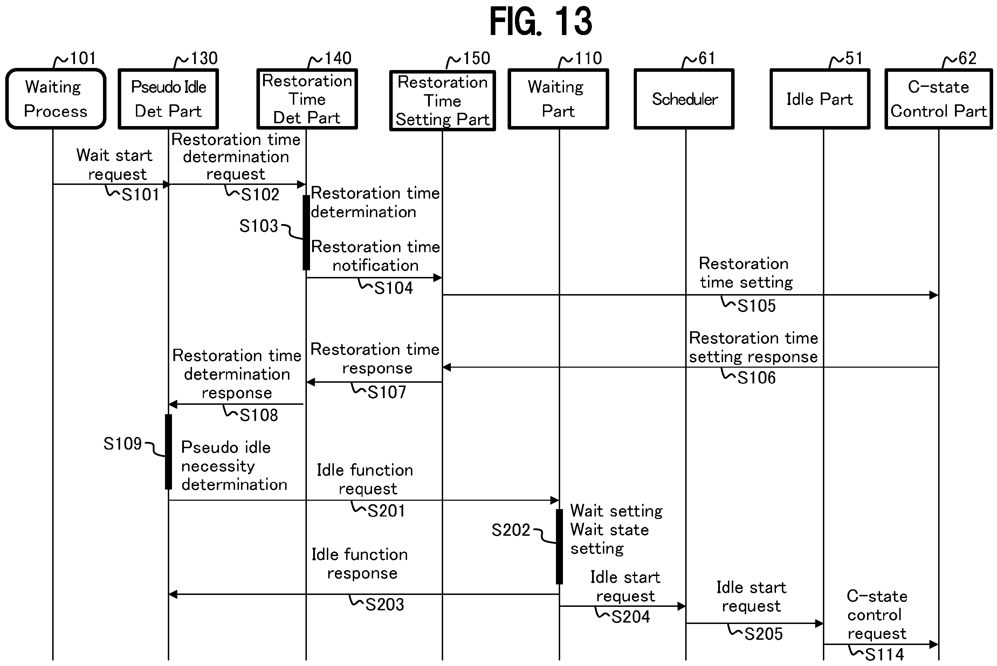

FIG. 13 illustrates a sequence in a case where the pseudo idle function prior to occurrence of event is unnecessary. The same processes as those in the control sequence of FIG. 12 are denoted by the same reference numerals.

Waiting process 101 requests (S101) pseudo idle determination part 130 to start waiting.

Pseudo idle determination part 130 requests (S102) restoration time determination part 140 to determine a restoration time.

Restoration time determination part 140 determines (S103) the restoration time. A detailed flow of the restoration time determination in step S103 will be described later with reference to FIG. 15.

Restoration time determination part 140 notifies (S104) restoration time setting part 150 of the restoration time .

Restoration time setting part 150 applies (S1051) a restoration time setting to C-state control part 62.

C-state control part 62 responds (S106) to restoration time setting part 150 with a response to the restoration time setting.

Upon reception of the restoration time setting response from C-state control part 62, restoration time setting part 150 responds (S107) to restoration time determination part 140 with a response regarding the restoration time.

Restoration time determination part 140 notifies pseudo idle determination part 130 of a restoration time determination response from restoration time setting part 150 (S108).

Pseudo idle determination part 130 makes (S109) a pseudo idle function necessity determination. A detailed flow of the pseudo idle function necessity determination in step S109 will be described later with reference to FIG. 16.

Pseudo idle determination part 130 makes (S201) an idle function request to waiting part 110 of waiting process 101.

Upon reception of the idle function request from pseudo idle determination part 130, waiting part 110 configures (S202) a wait setting and a wait state setting.

Waiting part 110 notifies (S203) pseudo idle determination part 130 of an idle function response to the idle function request.

Waiting part 110 requests (S204) scheduler 61 to start idling.

Scheduler 61 makes (S205) an idle start request to idle part 51.

Idle part 51 requests (S114) C-state control part 62 to perform C-state control.

### [Control Sequence 3]

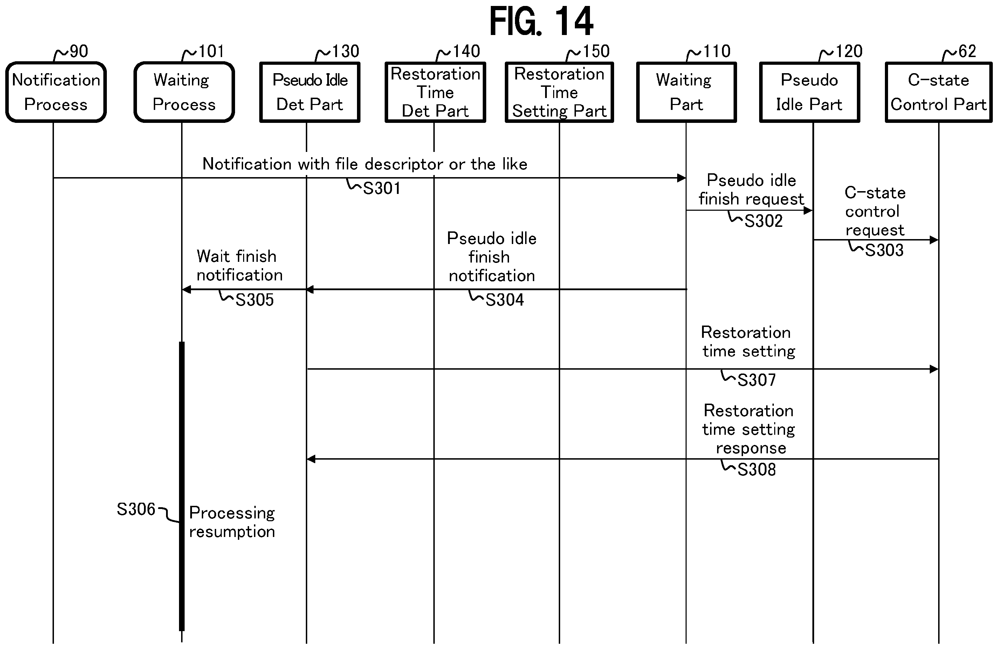

FIG. 14 is a sequence in a case where the pseudo idle function after the occurrence of an event is necessary.

Notification process 90 makes (S301) a notification with a file descriptor or the like to waiting part 110.

Waiting part 110 requests (S302) pseudo idle part 120 to finish the pseudo idling.

Pseudo idle part 120 requests (S303) C-state control part 62 to perform C-state control.

Waiting part 110 requests (S304) pseudo idle determination part 130 to finish the pseudo idling.

Pseudo idle determination part 130 notifies (S305) waiting process 101 of the finish of waiting.

Waiting process 101 resumes (S306) the processing.

Pseudo idle determination part 130 applies (S307) a restoration time setting to C-state control part 62.

C-state control part 62 responds (S308) to pseudo idle determination part 130 with a restoration time setting response.

### [Flowchart]

A description will be given of a flowchart of task scheduler device 100.

### [Flowchart 1]

FIG. 15 is a flowchart of executing the pseudo idle function in pseudo idle determination part 130. This is a detailed flow of the "pseudo idle necessity determination" in step S109 of FIGS. 12 and 13.

In step S11, pseudo idle determination part 130 determines whether there are zero other processes 104 operating during sleep of waiting process 101 on the same core as waiting process 101 (see the right diagram in FIG. 10).

If there are zero other processes 104 operating during sleep (S11: Yes), pseudo idle determination part 130 determines that an idle task will occur and executes the pseudo idle function in step S12.

In step S13, pseudo idle determination part 130 determines whether the sleep state control of the CPU is enabled by hardware setting (BIOS).

If the sleep state control of the CPU is enabled (S13: Yes), pseudo idle determination part 130 determines that C-state is available, and in step S14, determines whether the restoration time according to the governor of the OS is longer than an allowable restoration time (restoration time according to the governor of the OS > allowable restoration time).

If the restoration time according to the governor of the OS > the allowable restoration time (S14: Yes), pseudo idle determination part 130 determines that maximum restoration time control is necessary and in step S15, sets the allowable restoration time to the maximum restoration time (set maximum restoration time = allowable restoration time) and finishes the processing of this flow.

If there are not zero other processes 104 operating during sleep in step S11 (S11: No), pseudo idle determination part 130 determines that no idle task is present and in step S16, does not execute the pseudo idle function and proceeds to step S17.

If the sleep state control of the CPU is not enabled in above-described step S13, or if the restoration time according to the governor of the OS is equal to or less than the allowable restoration time in step S14 (restoration time according to the governor of the OS ≤ allowable restoration time), in step S17, pseudo idle determination part 130 finishes the processing of this flow without designating the maximum restoration time.

### [Flowchart 2]

FIG. 16 is a flowchart of determining the restoration time by restoration time determination part 140. This is a detailed flow of the "restoration time determination" in step S103 of FIGS. 12 and 13.

This flow is a method of determining the maximum restoration time using a C-state restoration time actually measured.

In step S21, assuming that, in time slot #n, the C-state actually observed = the maximum restoration time, restoration time determination part 140 determines whether the actually observed C-state is equal to a C-state allowed by the maximum restoration time (whether the C-state = a C-state allowed by the maximum restoration time).

If the C-state = a C-state allowed by the maximum restoration time (S21: Yes), in step S22, restoration time determination part 140 determines whether (the C-state restoration time allowed by the maximum restoration time + increment of the restoration time for the C-state one level deeper) is shorter than the allowable latency time.

If (the C-state restoration time allowed by the maximum restoration time + increment of the restoration time for the C-state one level deeper) < the allowable latency time (S22: Yes), in step S23, restoration time determination part 140 sets the maximum restoration time in the time slot #n+1 + the increment of the restoration time for the C-state one level deeper (allowed C-state + 1), and finishes the processing of this flow.

If, in above-described step S21, the condition that the C-state = a C-state allowed by the maximum restoration time is not satisfied (S21: No), restoration time determination part 140 determines that the restoration time should be shortened and in step S24, sets the maximum restoration time in the time slot #n+1 - the difference in the restoration time of the C-state one level shallower (allowable C-state - 1), and finishes the processing of this flow.

If, in above-described step S22, (the C-state restoration time allowed by the maximum restoration time + increment of the restoration time for the C-state one level deeper) ≥ allowable latency time (S22: No), in step S25, restoration time determination part 140 determines not to modify the maximum restoration time and finishes the processing of this flow.

In the above-described flow, for each time slot, determination is made as to whether an addition of delay is allowed even if a shift to the upper C-state is performed or whether a shift to the lower C-state is possible.

Here, in a case where periodicity is present in the past history, an immediate transition to a target C-state may be performed. In addition, when the actually observed C-state is C0, it is busy and thus the C-state may be immediately reverted to C0 without following step-by-step processes.

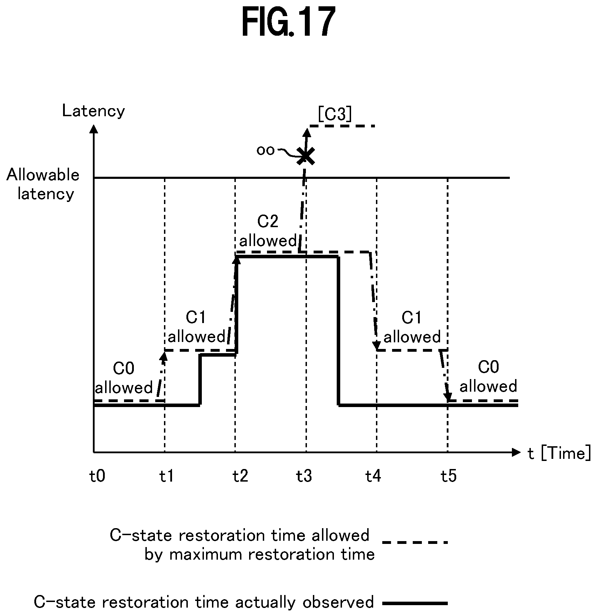

FIG. 17 is a diagram illustrating an operation example in a case where the maximum restoration time determination processing of FIG. 16 is executed. In FIG. 17, the vertical axis represents allowable latency, and the horizontal axis represents time. The dashed line in FIG. 17 indicates the C-state restoration time allowed by the maximum restoration time and the solid line in FIG. 17 indicates the C-state restoration time actually measured. As illustrated in FIG. 17, when the allowable C-state restoration time is set, the C-state restoration time actually measured follows the setting. FIG. 17 illustrates an example in which the target C-state being C3 was not allowed (reference sign oo in FIG. 17) in time slot t3, as the allowable latency was exceeded.

### [Hardware Configuration]

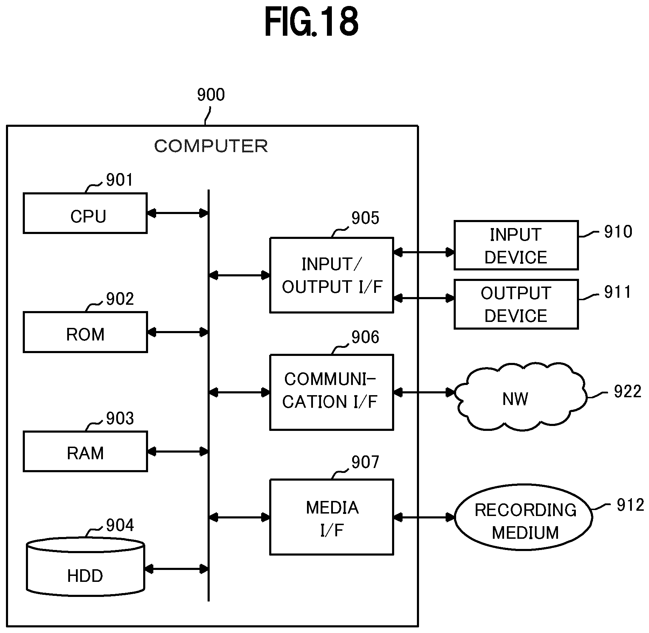

Task scheduler device 100 (FIG. 1) according to the above embodiment is implemented by a computer 900 having a configuration as illustrated in FIG. 18, for example.

FIG. 18 is a hardware configuration diagram illustrating an example of a computer 900 that implements the functions of task scheduler device 100 (FIG. 1).

Computer 900 includes a CPU 901, a ROM 902, a RAM 903, an HDD 904, a communication interface (I/F) 906, an input/output interface (I/F) 905, and a media interface (I/F) 907.

CPU 901 operates based on a program stored in ROM 902 or HDD 904, and controls each part of task scheduler device 100 (FIG. 1). ROM 902 stores a boot program to be executed by CPU 901 when computer 900 is started up, a program that relies on the hardware of computer 900, and the like.

CPU 901 controls an input device 910, such as a mouse and a keyboard, and an output device 911, such as a display, via input/output I/F 905. CPU 901 acquires data from the input device 910 and outputs generated data to the output device 911 via input/output I/F 905. Note that a graphics processing unit (GPU) or the like may be used as a processor in conjunction with CPU 901.

HDD 904 stores a program to be executed by CPU 901, data to be used by the program, and the like. Further, communication I/F 906 receives data from another device via a communication network (for example, network (NW) 922), outputs the data to CPU 901, and transmits data generated by CPU 901 to another device via the communication network.

Media I/F 907 reads a program or data stored in a recording medium 912, and outputs the program or data to CPU 901 via RAM 903. CPU 901 loads a program related to target processing from recording medium 912 onto RAM 903 via media I/F 907, and executes the loaded program. Recording medium 912 is an optical recording medium such as a digital versatile disc (DVD) or a phase change rewritable disk (PD), a magneto-optical recording medium such as a magneto optical disk (MO), a magnetic recording medium, a conductor memory tape medium, a semiconductor memory, or the like.

For example, in a case where computer 900 functions as task scheduler device 100 (FIG. 1) configured as one device according to the present embodiment, CPU 901 of computer 900 implements the function of task scheduler device 100 by executing a program loaded on RAM 903. Further, HDD 904 stores data in RAM 903. CPU 901 reads a program related to target processing from recording medium 912, and executes the program. Additionally, CPU 901 may read the program related to the target processing from other devices via the communication network (NW 922).

### [Effects]

As described above, provided is a computing system 1000 (FIG. 1) which includes a processor composed of a plurality of cores and in which a process that executes a predetermined command using a time on the processor operates, wherein the process includes: a waiting process 101 (FIG. 5, FIG. 7) that transitions into and remains in a wait state until notified and wakes up to resume an operation when notified; and a notification process 90 that transmits a notification to wake up the waiting process when an event occurs, and wherein waiting process 101 has a pseudo idle task 103 (FIG. 5, FIG. 7) that, when being in a waiting state, continues to occupy the processor.

With this configuration, computing system 1000 is able to cause waiting process 101 to behave the same as idle task 92 (FIGS. 4 and 6) that occurs when there is no process on the processor and executes nothing. In the event of waking up in waiting, scheduling of idle task 92 is not executed and thus the waiting process processing resumes without an occurrence of context switching. That is, pseudo idle task 103 causes waiting process 101 to behave the same as idle task 92 to eliminate context switching from idle task 92. Therefore, it is possible to reduce the time taken until the waiting process wakes up after the occurrence of an event.

In computing system 1000 (FIG. 1), pseudo idle task 103 (FIG. 5, FIG. 7) causes the processor to execute a sleep command.

In this way, pseudo idle task 103 is able to cause the CPU to execute a sleep (NOP) command. That is, pseudo idle task 103 remains in a sleep state in which pseudo idle task 103 executes nothing and, as a substitute of idle part 51 (FIG. 1), calls and executes C-state control part 62 (FIG. 1) that controls the operating state of the CPU. With this, it is possible to reduce the CPU cycle and reduce the power consumption of the CPU core.

A task scheduler device 100 (FIG. 1) that, in a computing system 1000 (FIG. 1) which includes a processor composed of a plurality of cores and in which a process that executes a predetermined command using a time on the processor operates, schedules the process, task scheduler device 100 including: a waiting process 101 (FIG. 5, FIG. 7) that transitions into and remains in a wait state until notified and wakes up and resumes an operation when notified; and a pseudo idle task 103 (FIG. 5, FIG. 7) such that, when being in a waiting state, waiting process 101 occupies the processor.

With this configuration, as the waiting process processing resumes without an occurrence of context switching, task scheduler device 100 is able to minimize the time taken until the waiting process wakes up after the occurrence of an event.

In task scheduler device 100 (FIG. 1), pseudo idle task 103 (FIG. 5, FIG. 7) causes the processor to execute a sleep command.

In this way, pseudo idle task 103 can cause the CPU to execute a sleep (NOP) command. With this, it is possible to reduce the CPU cycle and reduce the power consumption of the CPU core.

Task scheduler device 100 (FIG. 1) further includes a pseudo idle determination part 130 that determines whether to execute pseudo idle task 103 based on a process occurrence state on a same processor and/or a requirement of a latency time.

With this configuration, pseudo idle task 103 is able to be executed under appropriate conditions based on the process occurrence state on the processor and/or the requirement of the latency time. As pseudo idle task 103 provides effects and is executed only under a condition that does not affect other processes, it is possible to achieve the effect of "context switch elimination due to processor occupation" and the effect of "causing a sleep command to be executed".

Task scheduler device 100 (FIG. 1) further includes a restoration time setting part (restoration time determination part 140 and restoration time setting part 150) that sets a restoration time until pseudo idle task 103 (FIGS. 5 and 7) is restored after a task occurs.

With this configuration, task scheduler device 100 is able to shorten the latency time until the waiting process (waiting function) wakes up.

In task scheduler device 100 (FIG. 1), a restoration time control part (restoration time determination part 140 and restoration time setting part 150) overwrites a determined restoration time with a maximum restoration time and configures the maximum restoration time short, so that a transition to a deep sleep state is not caused.

In this way, it is possible to perform control so as not to fall into a deep sleep state, by designating the maximum restoration time of the pseudo idle task. The latency time from task assignment to the start of the operation is reduced, making it possible to perform operations with high real-time capability.

That is, task scheduler device 100 is able to shorten the latency time until the waiting process (waiting function) wakes up. Thus, <Requirement 1: Reduction of Notification Time> can be satisfied. In addition, task scheduler device 100 is able to cause a transition to a deep sleep state to reduce the power in the HW by taking the maximum restoration time long, leading to fulfillment of <Requirement 2: Power Saving Property>.

Note that, among the processing described in the above embodiment, all or some of the processing described as being automatically performed may be manually performed, or all or some of the processing described as being manually performed may be automatically performed by a known method. In addition to this, information including the processing procedures, the control procedures, the specific names, the various kinds of data, and the parameters mentioned above in the specification or illustrated in the drawings can be modified as desired, unless otherwise particularly specified.

Further, each of the components of each of the devices illustrated in the drawings is functionally conceptual, and is not required to be physically designed as illustrated. In other words, a specific form of distribution • integration of individual devices is not limited to the illustrated form, and all or part of the configuration can be functionally or physically distributed • integrated in any unit according to various loads, usage conditions, and the like.

Further, some or all of the components, functions, processing parts, processing means, and the like described above may be formed with hardware, such as being formed with an integrated circuit, for example. In addition, the components, functions, and the like may be implemented by software for interpreting and executing a program for causing a processor to implement the functions. Information such as a program, a table, and a file for implementing the functions can be held in a recording device such as a memory, a hard disk, or a solid state drive (SSD), or in a recording medium such as an integrated circuit (IC) card, a secure digital (SD) card, or an optical disc.

### Reference Signs List

50 Idle process (idle task)
51 Idle part
60 Kernel
61 Scheduler
62 C-state control part
90 Notification process
92 Idle task
100 Task scheduler device
101 Waiting process
103 Pseudo idle task
110 Waiting part
120 Pseudo idle part
130 Pseudo idle determination part
140 Restoration time determination part (restoration time control part)
150 Restoration time setting part (restoration time control part)
1000 Computing system
CPU core #m, CPU core #n, ... CPU core

## Claims

1. A computing system which comprises a processor composed of a plurality of cores and in which a process that executes a predetermined command using a time on the processor operates,
wherein the process comprises:
a waiting process that transitions into and remains in a wait state until notified and wakes up to resume an operation when notified; and
a notification process that transmits a notification to wake up the waiting process when an event occurs, and
wherein the waiting process has a pseudo idle task that, when being in a waiting state, continues to occupy the processor.

2. The computing system according to claim 1,
wherein the pseudo idle task causes the processor to execute a sleep command.

3. A task scheduler device that, in a computing system which includes a processor composed of a plurality of cores and in which a process that executes a predetermined command using a time on the processor operates, schedules the process, the task scheduler device comprising:
a waiting process that transitions into and remains in a wait state until notified and wakes up and resumes an operation when notified; and
a pseudo idle task such that, when being in a waiting state, the waiting process occupies the processor.

4. The task scheduler device according to claim 3,
wherein the pseudo idle task causes the processor to execute a sleep command.

5. The task scheduler device according to claim 3, further comprising:
a pseudo idle determination part that determines whether to execute the pseudo idle task based on a process occurrence state on a same processor and/or a requirement of a latency time.

6. The task scheduler device according to claim 3, further comprising:
a restoration time control part that sets a restoration time until the pseudo idle task is restored after a task occurs.

7. A waiting process wake-up method of a task scheduler device that, in a computing system which includes a processor composed of a plurality of cores and in which a process that executes a predetermined command using a time on the processor operates, schedules the process,
wherein the task scheduler device executes:
a waiting process that transitions into and remains in a wait state until notified and wakes up and resumes an operation when notified; and
a pseudo idle task such that, when being in a waiting state, the waiting process occupies the processor.

8. A program for causing a computer to function as the task scheduler device according to any one of claims 3 to 6.
